(19) Europäisches Patentamt / European Patent Office / Office européen des brevets

(11) **EP 3 360 191 B1**

(12) **EUROPEAN PATENT SPECIFICATION**

(45) Date of publication and mention
of the grant of the patent:
**21.08.2019 Bulletin 2019/34**

(51) Int Cl.:
***H01M 8/16*** *(2006.01)*      ***H01M 8/04537*** *(2016.01)*
***H01M 8/04746*** *(2016.01)*

(21) Application number: **16784545.2**

(22) Date of filing: **07.10.2016**

(86) International application number:
**PCT/FI2016/050704**

(87) International publication number:
**WO 2017/060570 (13.04.2017 Gazette 2017/15)**

(54) **METHOD FOR CONTROLLING THE OPERATION OF A MICROBIAL FUEL CELL ARRANGEMENT AND MICROBIAL FUEL CELL ARRANGEMENT**

VERFAHREN ZUR STEUERUNG DES BETRIEBS EINES MIKROBIELLEN BRENNSTOFFZELLENANORDNUNG UND MIKROBIELLE BRENNSTOFFZELLENANORDNUNG

PROCÉDÉ DE COMMANDE DE FONCTIONNEMENT D'UN AGENCEMENT DE PILE À COMBUSTIBLE MICROBIENNE ET AGENCEMENT DE PILE À COMBUSTIBLE MICROBIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.10.2015 FI 20155711**

(43) Date of publication of application:
**15.08.2018 Bulletin 2018/33**

(73) Proprietor: **Kemira Oyj**
**00180 Helsinki (FI)**

(72) Inventor: **HAVANSI, Hannele**
**FI-02280 Espoo (FI)**

(74) Representative: **Berggren Oy, Turku**
**P.O. Box 99**
**Tykistökatu 2-4 B**
**20521 Turku (FI)**

(56) References cited:
**WO-A1-2012/174270      GB-A- 2 165 087**
**US-A1- 2011 020 671**

## Description

The present invention relates to a method for controlling the operation of a microbial fuel cell arrangement as well as to a microbial fuel cell arrangement according to the preambles of the enclosed independent claims.

Microbial fuel cell (MFC) provides an alternative for energy generation. It offers a possibility to convert chemical energy into electrical energy by using microorganisms. A typical microbial fuel cell comprises a cell reactor with an anode and a cathode, which are connected to each other through an external electrical circuit. On the anode side of cell reactor biodegradable organic substances in an aqueous liquid medium are oxidized by microorganisms. The oxidation generates carbon dioxide, electrons and protons. Some microorganisms, which are called exoelectrogens, can release some of the electrons produced by cell respiration to the anode. The electrons are transferred via the external circuit to the cathode, and the protons are transferred to the cathode through the liquid medium. Electrons and protons are then consumed in chemical reaction(s) at the cathode. For example, in wastewater treatment electrons and protons are consumed at the cathode, combining with oxygen, e.g. from air, and forming water according to the reaction:

$$O_2 + 4H^+ + 4e^- \rightarrow 2H_2O$$

When a microbial fuel cell is operated in continuous mode and uses real process water or wastewater as influent, the quality and the quantity of the influent changes with time. Although microbial fuel cells tolerate changes in feed quality and quantity, sometimes problems are encountered and the operation of the microbial fuel cell is impaired, even severely. When level of organic substances is too low, exoelectrogens in the cell reactor do not have enough food and less power is produced. On the other hand overfeeding may lead to a permanently lower power production as exoelectrogen population in the cell reactor diminishes compared to other bacterial populations, such as methanogens. In practice the use of microbial fuel cells in continuous operation mode would therefore need a method with which the changes in influent quantity and quality could be counteracted.

GB 2165087 discloses an operation of microbial fuel cell, where the cell is run under conditions of fuel supply and load such that electrical output is dependent on fuel concentration, rather than being run under excess fuel so that power output is concentration independent. A method and apparatus are described to enable fuel cells to be run under energetic or coulombic efficiency control.

US 2011/0287328 discloses a flexible fuel cell including on or plurality of cell sections, wherein the cell section has at least a pair of electrode sheets which form an anode and a cathode, at least one of which is accompanied by an oxidoreductase present at a surface thereof. The cell comprises also a separator which is disposed between the electrode sheets and which has a proton-permeable membrane, a pair of current collectors, electrically connected to the electrode sheets with a conductive adhesive, and a fuel reservoir section, which is provided at such position as to make contact with the anode at least and in which a fuel solution containing fuel component is reserved.

An object of this invention is to minimise or even eliminate the disadvantages existing in the prior art.

Another object of the present invention is to provide a simple and effective method for controlling the operation of a microbial fuel cell arrangement.

A further object of the present invention is to provide a method with which disturbances in microbial fuel cell operation can be effectively detected and counteracted.

A yet further object of the present invention is to provide a method with which proper operation of the microbial fuel cell can be maintained even when the influent quality changes.

These objects are achieved and the invention is defined by the features disclosed in the independent claims. Some preferable embodiments of the present invention are presented in the dependent claims.

Typical method according to the present invention for controlling the operation of a microbial fuel cell arrangement having at least one microbial fuel cell unit, which unit comprises an anode and a cathode, which are connected with each other via an external electrical circuit, comprises

- feeding an influent flow of liquid medium, which comprises organic substance(s), to the microbial fuel cell unit,
- converting at least a part of the organic substance(s) into electrical energy in the microbial fuel cell unit by using microorganisms, such as exoelectrogens,
- removing an effluent flow of treated liquid medium from the microbial fuel cell unit,
- measuring potential of the anode against a reference electrode and obtaining measurement value(s) for the anode potential, and
- using the measurement value(s) for controlling the feed of the influent flow to the microbial fuel cell unit.

Typical microbial fuel cell arrangement according to the present invention, comprises

- at least one microbial fuel cell unit comprising a cell reactor having an inlet and outlet for liquid medium, as well as an anode and a cathode arranged in the cell reactor and connected with each other through an external electrical circuit,
- means for measuring potential of the anode,
- means for adjusting influent flow to the inlet,
- a controller, which is arranged in functional contact with the means for measuring the potential of the anode and with the means for adjusting the influent flow to the inlet.

Now it has been found out that the measurement value(s) for the anode potential provides a reliable indicator, which can be used to obtain information about the exoelectrogenic activity in the microbial fuel cell arrangement. The feed of the influent flow is then actively controlled and optionally adjusted in order to obtain or maintain appropriate conditions for the exoelectrogens in the microbial fuel cell arrangement. It was realised that the anode potential is suitable parameter for monitoring the conditions in the microbial fuel cell as the anode potential is relatively insensitive for changes, e.g. in external electrical circuit. Furthermore the anode potential is relatively insensitive to cathode deterioration, e.g. catalyst poisoning. All this makes the method according to present invention suitable for robust process control.

According to one preferable embodiment of the present invention the feed of the influent flow is adjusted on basis of the obtained measurement value(s) for the anode potential. This means that the anode potential value(s) is/are used for assessing the need to adjust, i.e. increase or decrease, the feed of the influent flow. For the assessment of the adjustment need it is possible to use also other information available from the arrangement, e.g. value(s) for additional parameters, which are described more closely later in this text.

In the present application the terms "potential of an anode" and "anode potential" are used alternately and they are fully interchangeable with each other. In the present context the anode potential is understood as the potential difference between the anode electrode of the microbial fuel cell and a reference electrode. The reference electrode which is used for determining the anode potential may be any suitable reference electrode, which is stable and robust, and is able to maintain a reproducible potential in continuous contact with the liquid medium. The reference electrode may be a single junction electrode, multiple junction electrode or all-solid-state electrode. A typical example of a suitable reference electrode is double junction Ag/AgCl electrode. The reference electrode may be arranged in the microbial fuel cell on the anode side, or in contact with the liquid medium flow near the anode side of the microbial fuel cell. The reference electrode may be arranged in the influent flow or in the effluent flow of the arrangement, preferably in the effluent flow. The reference electrode may be easier to change when arranged to the effluent flow, or it may cause fewer disturbances to the operation of the microbial fuel cell arrangement.

Sometimes the reference electrode may be adversely affected by the liquid medium, which may lead, for example, poisoning of the electrolyte within the reference electrode and/or plugging of its liquid junction. This naturally has an effect on the potential of the reference electrode, and may cause the potential to drift in time or to change abruptly to a different level. Change or drift in the reference potential causes also change or drift of the measured value(s) of the anode potential. According to one preferable embodiment the reference electrode is replaced at predetermined intervals, preferably once in every 1 to 3 months. The replaced reference electrode may be stored in its filling electrolyte until its potential reaches or regains an acceptable level, after which it is ready for reuse in the arrangement.

If the reference electrode exhibits a stable drift from its initial potential, this drift can be taken into account and compensated by calculating or selecting a suitable compensation constant, which indicates how much the reference electrode drifts per time unit from the time when it was last stored in its electrolyte. The measured anode potential value is then corrected by using the compensation constant. The error in reference electrode potential is preferably measured at intervals by comparing the reference electrode in use against an external reference electrode, which has been stored in its filling electrolyte prior to the error measurement. The electrodes are arranged in liquid contact and the error measurement is performed. The potential difference between the reference electrode in use and the external reference electrode gives a good and reliable indication about the error caused by potential drift. It is preferable to have in the microbial fuel cell arrangement at least one external reference electrode, which may easily replace the reference electrode in use, when the error in reference potential has increased over an accepted limit, such as $\pm$ 20 mV.

According to one preferable embodiment of the invention the influent feed is controlled and/or adjusted by adjusting the feed rate of the influent flow on basis of the obtained measurement value(s) for the anode potential. The feed rate is here understood as the amount of liquid medium, which is fed to the microbial fuel cell unit or arrangement under a specific time interval. Adjustment of the feed rate means that the amount of liquid medium fed to the microbial fuel cell unit or arrangement is either increased, decreased or kept constant. Preferably the feed is adjusted by increasing or decreasing the feed rate. For example, the feed interval to the microbial fuel cell or the pumping speed of the influent flow may be adjusted on basis of the measured anode potential. It is also possible to adjust the influent feed by changing the concentration of the organic substance(s) in the liquid medium, either by diluting or concentrating the influent feed. It is also possible to adjust the influent feed by adjusting both the feed rate and the concentration of the influent feed.

The potential of the anode can be measured continuously or at predetermined time intervals. The obtained measurement values can be used directly for control of the influent feed or preferably an average value can be calculated by using direct measurement values obtained over a predetermined period of time, whereafter an average value is calculated and used for control of the influent feed. More preferably, a weighted average value is calculated by using measurement values obtained under a predetermined time period, the weights for individual measurement values increasing from the start of the period towards the end of the period. According to one preferable embodiment of the invention the potential of the anode is measured continuously and a weighted average value is calculated for the anode potential, which value is used for controlling and/or adjusting the feed of the influent flow. When calculated values, especially calculated weighted average values of the anode potential are used for controlling and/or adjusting the feed, it is possible to eliminate sudden swings or disturbances present in the directly obtained measurement data. According to one embodiment of the present invention the arrangement may comprise memory means for storing the measured anode potential values and/or calculation means for calculating an average anode potential value from the measured anode potential values.

According to one embodiment of the invention a minimum and/or maximum limit value is predetermined for the potential of the anode, and the feed of influent flow is adjusted when the potential of the anode deviates outside the minimum and/or maximum limit value. The minimum and/or the maximum limit value define thus an accepted range for the potential of the anode. The minimum and maximum limit values depend on a variety of factors, such as the composition and/or concentration of the biodegradable organic substances in the liquid medium; reference electrode type; operating temperature of the microbial fuel cell; bacterial species present in the cell; as well as the existence of possible control of the external electrical circuit of the microbial fuel cell. For example, if a pure bacterial culture is used in the microbial fuel cell then the measured anode potential also reflects the metabolism of the culture. On the other hand, if the external electrical circuit of microbial fuel cell arrangement is controlled in order to optimise and/or harvest energy, the anode potential may be higher compared to corresponding static-loaded microbial fuel cell arrangement. Minimum and/or maximum limit values can also be determined on basis of the redox potential of the liquid medium before its feeding to the microbial fuel cell.

Suitable maximum and/or minimum limit values are thus specific for each arrangement, operating conditions and liquid medium. However, a person skilled in the art is able to determine these limit values with few simple measurements and/or test runs. For example, the minimum limit value may be determined automatically by measuring the redox potential of the liquid medium, which is used as the influent. The higher the difference between the redox potential of the liquid medium and the anode potential, the higher the possible metabolic energy gain for the microorganisms, but the lower the maximum attainable voltage from the microbial fuel cell. A very negative anode potential, which approaches the redox potential of the influent, is likely to limit the capacity of microorganisms to transfer electrons to the anode. Consequently, if the anode potential is too low, the electron transport is inhibited and fermentation of the substrate may provide greater energy for the microorganisms. Thus the redox potential of the influent can be used when defining the minimum limit value for the anode potential. On the other hand, it has been observed that no significant gain in power generation is likely to occur when anode potential exceeds the potential of the standard hydrogen electrode. This can be taken as the maximum limit value for the anode potential, because when uncontrolled anode potential rises above a certain level, it is an indication that the conditions in the microbial fuel cell are not optimal for the electroactive biofilm.

According to the present invention the anode potential is not electrically controlled, i.e. is free of external electric control that would force it towards a specific potential value. This means that the anode potential is free to change as a result of exoelectrogenic activity of the microbial fuel cell unit.

According to one embodiment of the invention it is possible to adjust the feed of the influent flow on basis of the anode potential in order to minimise methanogen activity within the microbial fuel cell. In this embodiment the anode potential is measured and monitored. Preferably the anode potential is close to the maximum limit value. If the anode potential exceeds the maximum limit value, the feed is increased. If the anode potential decreases below the minimum limit value, the feed is decreased.

The controller, which is arranged in functional contact with the means for measuring the potential of the anode and with the means for adjusting the influent flow to the inlet, may be a proportional-integral derivative controller. The anode potential is the process variable and the influent feed, e.g. feed rate, is the control variable.

According to one embodiment of the invention it is possible to measure value of an additional parameter, which is selected from pH, relative hydrogen (rH) value, concentration of organic substance(s) and/or redox value of the influent flow and/or the effluent flow, and use the obtained measurement value for the additional parameter for control and/or adjustment of the influent flow. It has been observed that measurement of these additional parameters further improve the accurate control and/or adjustment the influent feed in order to optimise the conditions in the microbial fuel cell. Furthermore, these additional parameters, such as pH or rH, may provide such information about the existing conditions in the microbial fuel cell which is not easily interpreted solely from the anode potential measurements. For example, if the pH value of the effluent flow decreases without corresponding decrease in pH value of the influent flow at the same time, this usually indicates that the anode is producing more protons than the reactions on the cathode reaction are consuming. pH value of the effluent flow can thus be used to determine whether the measured change in the anode potential is due to overfeeding or insufficient feeding of the microbial fuel cell. When pH within a microbial fuel cell falls below a certain level, such as under pH 6 or under pH 6.5, microbial activity at the anode is usually severely impaired.

According to one embodiment the pH of the influent flow and the effluent flow is measured in order to pH determine difference between the measured flows. This pH difference corresponds to the pH change within the microbial fuel cell arrangement. It has been observed that if the pH change inside the microbial fuel cell arrangement is significant, the conditions for exoelectrogen activity may not be at the optimal level, even if the pH values for influent and effluent would still be within acceptable ranges.

The arrangement may comprise at least one additional sensor selected from a group of pH sensors, sensors for measuring concentration of organic substance(s) and/or redox sensor. The sensors are preferably online sensors and arranged to provide continuous measurement data for the additional parameter in question. Such suitable sensors are known as such in the art and they are not described in this application in detail.

A lower and/or upper limit value may be predetermined for the additional parameters, such as influent flow pH, effluent flow pH and/or for difference between the influent and effluent pH, and the feed of the influent flow is adjusted when the value of the additional parameter deviates outside the lower and/or upper limit value. This means that when the measured value for the additional parameter deviates outside an accepted range defined by the lower and upper limit values the feed of the influent flow is adjusted. The limit values and the accepted range depend on a variety of factors, such as the composition and/or concentration of the organic substances in the liquid medium; hydraulic retention time; active anode area/anode chamber volume ratio; as well as the oxidative medium of the cathode and the concentration of such medium. The lower and upper limit values are thus determined specifically for each arrangement and liquid medium. However, a person skilled in the art is able to determine the limit values with few simple test runs using the appropriate influent and the hydraulic retention time range for the specific microbial fuel cell arrangement.

According to one embodiment of invention the minimum and maximum limit values for the potential of the anode are first determined. When the potential of the anode is measured against the reference electrode, and it is observed that the potential of the anode is within an accepted range defined by the minimum and the maximum limit values, the microbial fuel cell unit or arrangement operates in principle at required manner and the conditions for exoelectrogenic activity are satisfactory. However, it is possible to measure the value of at least one additional parameter and use the obtained measurement value for at least one additional parameter for controlling and/or adjusting the feed of the influent flow. In this case the value of the additional parameter is used for adjustment of the feed in order to adjust or maintain the anode potential on a specific desired level.

According to another embodiment, the measured values for the above described additional parameters may be used for adjusting the feed of the influent flow, when the measured anode potential is inside the accepted range defined by the predetermined maximum and minimum limit value, but the value for the additional parameter is outside its accepted range defined by the predetermined lower and upper limit value. For example, if the measured pH value for effluent flow falls below the predetermined lower limit value, the feed may be decreased.

According to one embodiment of the present invention, in case the anode potential deviates from the set limit values, for example exceeds the predetermined maximum limit value, feed of the influent flow is adjusted in order to return the anode potential value back to the accepted range inside the predetermined minimum and maximum values. For this adjustment it is possible to use also measured values of one or several of the additional parameters described above, if such measured values are available.

According to one preferable embodiment of the invention the minimum and maximum limit values for the potential of the anode are first determined. When the potential of the anode is measured against the reference electrode and it is observed that the potential of the anode is outside the minimum or the maximum limit values, the value of at least one additional parameter is measured and used for adjustment of the feed of the influent flow. For example, in case the anode potential has exceeded the predetermined maximum limit value, but the measured pH value has not fallen below the predetermined lower limit, the feed may be increased, for example by 10 volume-%. Alternatively, in case the anode potential has exceeded the predetermined maximum limit value and the measured pH value has fallen below the predetermined lower limit, the feed may be decreased, for example by 25 volume-%. In other words, if the pH value of the effluent and/or the pH difference between the influent flow and effluent flow is measured in addition to the anode potential, and when these measurements indicate that the pH value has fallen below the predetermined lower limit, this measured value for the additional parameter may be used for determining whether feed of the influent flow is to be increased or decreased.

According to one embodiment of the invention also the power production of the microbial fuel cell arrangement may be used in addition to the anode potential for control and/or adjustment of the influent feed. For example, if an adjustment leads to a power production decrease, which is higher than 10 %, the feed of the influent flow may be readjusted in reverse direction in order to alleviate the situation.

It is possible to also control the influent flow and/or effluent flow by measuring the concentration of biodegradable organic substance(s) in the said flow(s). For example, chemical oxygen demand, COD, value can be used to assess the quality of the flow. If desired, the obtained results can be used for adjusting the influent flow together with the anode potential and/or other parameters described above. For example, the difference between the concentration of biodegradable organic substance(s) of the influent and effluent flows gives an indication of the rate with which the organic substances are degraded in the microbial fuel cell. In this embodiment the adjustment of the feed of the influent flow takes account both the quality and the quantity of the liquid medium, which is used as influent.

According to one embodiment of the invention at least one minimum and maximum feed level for the feed of the influent flow is determined. In practice this means that a minimum and/or maximum feed rate is determined and the feed rate is then adjusted within the determined limits. An alarm may be triggered if the determined feed limit has been reached and the anode potential is not in the accepted potential range. For example, if a maximum feed rate has been reached and the measured anode potential still stays above the predetermined level, this may indicate a blockage in influent or effluent line.

According to a further embodiment of the invention information about the amount of available liquid medium is also used for adjustment of the feed of the influent flow. For example, the level of liquid medium in a storage/feed tank is monitored, and these observations are incorporated into the adjustment of the feed of the influent flow. However, feed adjustments based on the amount of available liquid medium are usually incremental, for example around 10 volume-%. It is preferred that feed adjustments based on amount of available liquid medium are applied only in situations where at least anode potential and preferably also other parameters defined above are within their accepted ranges

According to one embodiment of the invention a wait time is applied between two successive adjustments of influent feed. Typically there is a minimum wait time between two succeeding feed adjustments, as there is a minimum time, which microorganisms, such as exoelectrogens, need to react to feed adjustment. If two successive feed adjustments are done too close to each other, it may result in arrangement instability due to rapidly changing conditions. The length of the wait time may also depend on hydraulic retention time (HRT) of the microbial fuel cell. The longer the hydraulic retention time, the longer the wait time. The wait time may be calculated as follows: wait time (in hours) = (Hydraulic Retention Time)/3.

According to one preferable embodiment of the invention the arrangement comprises a plurality of microbial fuel cell units arranged in series, whereby the anode potential of at least one microbial fuel cell unit is measured and the feed of the influent flow to the arrangement is adjusted. The adjustment can be made on basis of the obtained measurement values for the anode potential, or the adjustment can be made on basis of the measured anode potential values together with measured value(s) for additional parameters, as described above. Preferably the measured values for the anode potential is used in the adjustment of feed of the influent flow. When the arrangement comprises a plurality of microbial fuel cell units, the effluent flow of the previous unit forms the influent flow of the succeeding unit, which means that the units are operated in hydraulic series. The feed of organic substances decreases for each individual unit in series from the first unit to the last unit. It is possible to measure the anode potential from one unit or from several units, sometimes even from all units, in the arrangement. For example, the anode potentials may be measured at least from the first and the last unit in hydraulic series when several measurements are made. It is also possible to measure the anode potential from units between the first and the last unit. The measurement values may be used to adjust the feed of the liquid medium to the arrangement. This makes it possible to optimise the conditions in the individual microbial fuel cell units.

In case the individual microbial fuel cell units in the arrangement have individual feed means, they can be controlled individually on basis of the obtained measurement results. Typically all the individual microbial fuel cell units in one arrangement are controlled together.

The microbial fuel cell arrangement may also comprise a separate control for electrical energy produced by the arrangement. The control may actuate changing of the external resistor value in order to optimise the power production or switching to harvest energy. Adjustments needed for electrical energy control are usually performed more frequently than the adjustment of feed of the liquid medium. The control of the feed is relatively insensitive to possible rapid perturbations in the electrical circuit caused by the electrical energy control as the feed is controlled and/or adjusted preferably on a persistent change in anode potential and possible other variables.

The feed of the liquid medium may be adjusted freely, or it is possible to determine discrete steps with which the feed rate can be adjusted.

According to one embodiment the feed of the liquid medium may be adjusted even when the anode potential, and the optional additional parameters, are within their accepted set limit values. These adjustments may be performed in order to improve the quality of the effluent of the microbial fuel cell and/or to improve the production of electrical energy. The adjustments may comprise either increase or decrease of the feed, selected by the operator to fit the overall process targets. In this embodiment the wait time is normally longer, compared to embodiments where the adjustment is made in order to correct a deviation outside the accepted range.

The present method is suitable for microbial fuel cell units, which comprise a cell reactor with at least one anode and at least one cathode. The anode and cathode are connected to each other through an external electrical circuit and through the liquid medium present in the cell. Electroactive biofilm is formed by the microorganisms, such as exoelectrogens, on the anode material and the biofilm oxidizes organic substances in the liquid medium and transfers electrons to the anode. The oxidation generates carbon dioxide, electrons and protons. The electrons are transferred via the anode and the external circuit to the cathode, and the protons are transferred to the cathode through the liquid medium. The electrons and protons react with the oxidative medium at the cathode, optionally enhanced by a catalyst.

The anode and cathode contain a mixture of one or more electrically conductive materials, such as metals, carbon or polymers. They may also contain other materials, for example ion exchange materials. The anode material may not hinder exoelectrogenic activity. The microbial fuel cell reactor may also contain a separator between anode and cathode. The separator allows close spacing of the anode and cathode while preventing short circuit. For this purpose the separator comprises at least one electrically insulating layer. The separator may also serve additional purposes, for example it can protect the cathode from fouling or limit the diffusion of fluids from the cathode to the anode. The separator may also be a membrane, for example a cation selective membrane. Anode and cathode can be formed according to the need, for example as flat sheet or hollow tube.

The liquid medium used as feed in the present invention comprises organic substances, such as fatty acids, sugars and/or alcohols, which are degradable by the microorganisms in the microbial fuel cell. According to one embodiment of the present invention the liquid medium is preferably an effluent from pulp and paper industry process, oil and gas industry process, or mining process. The liquid medium to may also preferably originate from food or beverage industry, for example from brewery or dairy. According to another embodiment of the invention the liquid medium is municipal or agricultural wastewater.

The pH of the liquid medium may be adjusted in prior feeding it to the microbial fuel cell, preferably between pH 6 - 9. Measurement information obtained about the anode potential and/or about described additional parameters may be used for adjustment of pH value of the liquid medium.

EXPERIMENTAL

Some embodiments of the invention are described in the following non-limiting examples.

**Arrangement Construction**

A microbial fuel cell arrangement comprising of a MFC reactor, various sensors, pumps and a feed controller was designed and evaluated in laboratory scale.

Three similar microbial fuel cell reactors were used in the examples. Each reactor comprised an anode, which was a carbon cloth (FuelCellsEtc GDL-CT) and a cathode, which was a carbon cloth with catalyst and waterproof layer (FuelCellsEtc GDL-CT with 2 mg/cm$^2$ platinum and PTFE). Anode chamber volume was 25 ml in all examples. Active electrode areas were 50 cm$^2$. The reactor configuration was flat sheet. A separator, which was tissue, was placed between the anode and cathode

A pH electrode and a PT100 thermometer were arranged in a pre-fermentation vessel, from which the feed of liquid medium was pumped to the reactor inlet of the microbial fuel cell. The pre-fermentation vessel and microbial fuel cell were arranged close to each other in order to avoid unnecessary degradation of organic substances in the influent feeding line. The reactor inlet was located in the lower part of the anode chamber of the reactor and the effluent outlet was located on the upper part of the anode chamber of the reactor. A reference electrode was placed in the effluent flow close to the reactor outlet and pH electrode was placed in the effluent flow close to the reference electrode. The effluent flow was led to an effluent vessel.

Used pH electrodes were obtained from Van London-Phoenix, type PHO-5533501. Reference electrodes were from BASi, type RE-5B Ag/AgCl. Pumps were Masterflex L/S 07522-30. Each pH electrode was connected to a signal converter and the signal converters were connected to Siemens IO cards. The controller was S7-300 314 Programmable Logic Controller (PLC) using 4 Siemens S7-300 IO cards: 2 analog inputs and 2 analog outputs. The setup included a Siemens TP177 touch screen as user interface. Thermometer, anode electrode, reference electrode and pumps were connected to the IO cards. Temperature compensation for pH was done within the control logic based on the individual pH signals and temperature of pre-fermented wastewater as measured by the PT100. Controller sent also 4-20 mA signals to datalogger (Agilent 34972A). The signals included the pH measurements, temperature measurement and flow orders.

**Operation of the Arrangement**

The three identical microbial fuel cell arrangements were inoculated at the same time. The inoculation lasted 3 days. The arrangements were operated for 66 days in total. The arrangements were operated at 27.6±0.6 °C temperature.

The arrangements were fed with pre-fermented brewery wastewater. The hydraulic retention time of the pre-fermentation vessel varied between 16 - 24 hours. The soluble COD of the pre-fermented wastewater varied between 3300±700 mg/l during the testing period.

Each arrangement had its own pump for feeding pre-fermented brewery wastewater as liquid medium. After inoculation all three arrangements started receiving liquid medium at a flow rate 2 ml/h. From day 11 onwards liquid medium was fed to two arrangements at a rate determined by the measurement results obtained from the arrangements. Liquid medium was fed through the reactor at a flow rate, which varied between 2 - 20 ml/h. Adjustments to the feed were done manually for one arrangement based on the anode potential and COD reduction. For this arrangement the feed rate was 2 ml/h during operation days 3 - 59, and 3 ml/h during operation days 59 - 66.

When deemed necessary, an analysis of soluble COD was performed two to three times a week. Analysis of the soluble COD was performed on a sample from pre-fermentation vessel and on samples at the end of effluent line. Weights of effluent vessels were measured at the same time.

A variable external resistor was connected between anode and cathode. Its value was changed manually from initial 500 Ohm to 60 Ohm at the end of the test period in four intermediate steps. Potentials of the anode, cathode and reference electrode were measured at 3 - 10 minute intervals and recorded with the datalogger. The cell voltage and external resistor value were used to calculate power and current. All power production ($W/m^3$) results and COD removal ($kg/m^3/d$) results are expressed in relation to anode chamber volume.

**Control logic for the arrangements**

Automatic control logic was programmed by using the anode potential, pH of the influent flow and pH of the effluent flow as parameters. If the anode potential exceeded its predetermined level and/or the effluent pH fell below its predetermined level, following criteria was used to determine whether flow rate needed to be increased or decreased:

1) In case the anode potential had exceeded the predetermined level, but the effluent pH had not fallen below the predetermined level, and there had not been a feed rate change within a defined wait time, the feed rate was increased by a predetermined amount of 10 %.

2) In case anode potential had exceeded the predetermined level and the effluent pH had fallen below the predetermined level, and there had not been a feed rate change within a defined wait time, the feed rate was decreased by a predetermined amount of 25 %.

3) In case the anode potential was still within the accepted range, but the effluent pH had fallen below the predetermined level and there had not been a feed rate change within a defined wait time, the feed rate was decreased by a predetermined amount. If the influent pH was above its predetermined level, the feed rate was decreased by of 10 %, otherwise the decrease was 25 %.

A rule for maximising feed rate was included: when the anode potential was below a predetermined level and the effluent pH was above a predetermined level, after every $n^{th}$ wait time period a 10 % increase was applied to feed rate.

Feed was adjusted after a wait time. Wait time was calculated as follows: wait time (in hours) = (Hydraulic Retention Time)/3. If the feed rate was changed based on changes in the anode potential or effluent pH, an additional delay of 0.5 hour was added in wait time calculation.

The control logic defined for each MFC arrangement the flow order, i.e. the actual amount of liquid medium that was fed to the MFC arrangement under one hour. Operator could manually change the flow orders defined by the control logic to start a new experiment. The influent pumps feeding the liquid medium were operated in 1 minute periods. The control logic adjusted the time when pumping was on during the period to achieve the defined flow order. The pumping speed during pumping intervals was defined by the maximum flow limit.

The limit values for anode potential, influent flow pH and effluent flow pH, which were used in control logic, could be changed during operation. Other operator definable parameters were wait time multiplier n and maximum feed flow. Following values or value ranges were used for limits and variables during the test:

- Anode potential: -380 - -420 mV, vs. Ag/AgCl 3 M NaCl reference electrode for pre-fermented brewery wastewater, 28 °C operation temperature, mixed bacterial culture;
- Effluent flow pH: 6.5 - 6.8, for pre-fermented brewery wastewater and air cathodes;
- Influent flow pH: 6.3 - 6.7, for pre-fermented brewery wastewater and HRT 1-13 hours;
- Wait time multiplier n: 4 - 8;
- Minimum flow: 2 ml/h;
- Maximum flow: 5-20 ml/h

**Example 1**

There was a sudden increase in anode potential. Effluent flow pH was above the defined upper limit value of 6.6. Controller increased feed rate twice until anode potential levelled below the defined limit -420 mV.

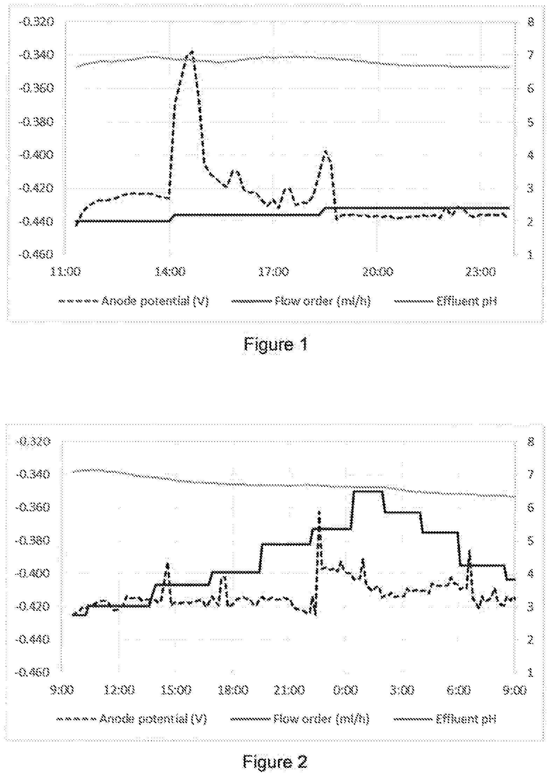

Figure 1 shows the anode potential, flow order and effluent flow pH for controlled MFC arrangement 1 used in Example 1.

**Example 2**

Anode potential rose above the defined limit of -420 mV. Six feed rate increases were applied until effluent flow pH decreased below the defined limit value of 6.6. The low pH value was considered to indicate overfeeding. After that the controller decreased the feed rate, four feed rate decreases were applied. Example 2 shows that the defined anode potential limit was possibly too low and resulted in unnecessary feed rate changes. However, the controller was able to adjust and readjust feed rate accordingly.

Figure 2 shows the anode potential, flow order and effluent flow pH for controlled MFC arrangement 1 in Example 2.

**Example 3**

External resistor was changed from 125 Ohm to 90 Ohm during the experiment at time 15:20. Anode potential rose momentarily. Effluent feed pH was above the defined limit value of 6.8. Controller increased feed rate twice until anode potential levelled below the defined limit value of -400 mV. As the change in external circuit was substantial, it affected also the anode potential and controller adjusted feed rate of the liquid medium accordingly.

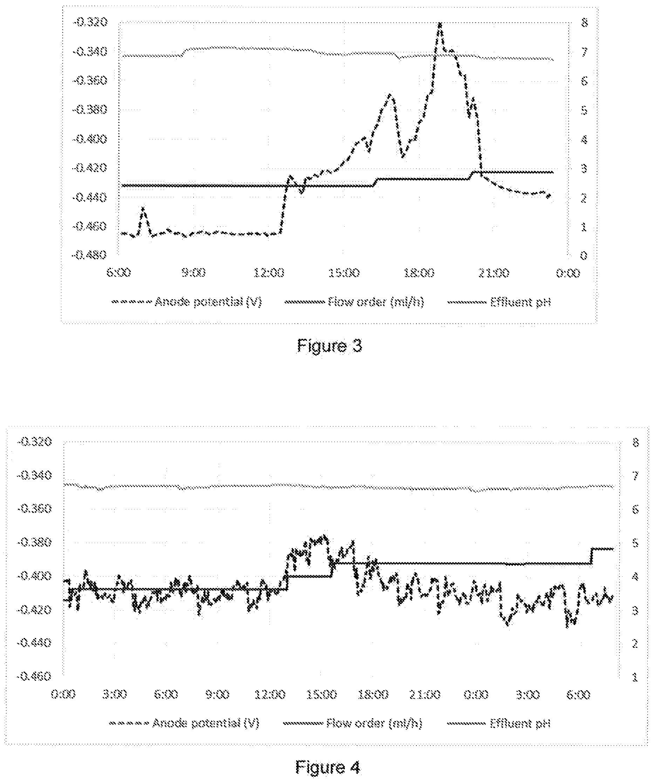

Figure 3 shows the anode potential, flow order and effluent flow pH for controlled MFC arrangement 1 used in Example 3.

**Example 4**

External resistor was changed from 75 Ohm to 60 Ohm during the experiment at time 13:00 and anode potential rose above the defined limit value of -395 mV. Effluent flow pH was above the defined limit value of 6.5. Controller increased feed rate twice until anode potential levelled below the defined maximum limit value. As the effluent flow pH remained above the limit, feed rate was increased as an additional adjustment using wait time multiplier value n=8.

Figure 4 shows the anode potential, flow order and effluent flow pH for controlled MFC arrangement 2 used in Example 4.

**Example 5: Comparison of performance of MFC Arrangements**

Coulombic efficiency is compared for the controlled MFC arrangements 1 and 2 and the reference MFC.

The coulombic efficiency (CE%) is calculated using the ratio of total coulombs obtained, $C_{out}$ to the theoretical amount, $C_{in}$, available from complete influent oxidation:

$$CE\% = C_{out}/C_{in} \times 100 \% = (I \times t)/((F \times n \times \Delta COD \times V)/M)$$

where

I is the average daily average current (A), calculated from cell voltage and resistor value;
t is the time interval;
M is the molecular weight of oxygen;
F is the Faraday constant;
n is the number of electrons exchanged per mole of oxygen;
$\Delta COD$ is the weight of removed amount in soluble COD;
V is the volume of reactor anode chamber.

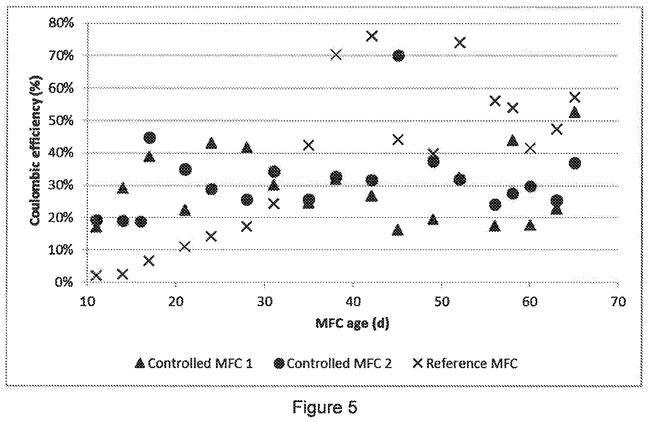

Figure 5 shows the coulombic efficiency for the MFC arrangements in Example 5.

It can be observed from Figure 5 that the reference MFC arrangement had after day 30 of the test period usually a higher coulombic efficiency value than the controlled MFC arrangements 1 and 2. This outcome is expected as the controller was programmed to increase feed at intervals if the anode potential and effluent flow pH values were in the defined range. The target for the control of the controlled MFC arrangements was to maximize COD removal without impairing exoelectrogenic activity. The result was a decrease in the coulombic efficiency, as the current could not be increased at the same time.

Figure 8 shows the coulombic efficiency for the MFC arrangements in Example 5.

Maximum power point (MPP) data for MFC arrangements are shown in Table 1. MPP data was obtained from linear sweep voltammetry (LSV) scans using two electrodes and a potentiostat (Ivium nSTAT). First scans were performed at day 9 and last scans were performed at day 62.

Even though the controlled MFC arrangements were run to maximize COD reduction, power production results of LSV scans for all three MFCs are similar. Thus the feed rate has not been too high to degrade the electroactive biofilm. The target of the example was achieved: higher COD removal without power decrease. For comparison purposes the average COD removal rate during the test period is included in table 1.

Table 1. Maximum power point and COD removal results for Example 5

| Reactor | Number of LSV scans | Average of MPP results (W/m$^3$) | Maximum of MPP results (W/m$^3$) | Average of COD removal (kg/m$^3$/d) |
|---|---|---|---|---|
| Reference MFC | 3 | 137 | 155 | 3.5 |
| Controlled MFC 1 | 4 | 129 | 162 | 4.6 |
| Controlled MFC 2 | 4 | 140 | 154 | 4.5 |

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

**Claims**

1. Method for controlling operation of a microbial fuel cell arrangement having at least one microbial fuel cell unit, which unit comprises an anode and a cathode, which are connected with each other via an external electrical circuit, the method comprising

   - feeding an influent flow of liquid medium, which comprises organic substance(s), to the microbial fuel cell unit,
   - converting at least a part of the organic substance(s) into electrical energy in the microbial fuel cell unit by using microorganisms,
   - measuring potential of the anode against a reference electrode and obtaining measurement value(s), and
   - using the measured value(s) for controlling the feed of the influent flow to the microbial fuel cell unit, and
   - removing an effluent flow of treated liquid medium from the microbial fuel cell unit.

2. Method according to claim 1, **characterised in** adjusting feed of the influent flow on basis of the obtained measurement value(s) for the anode potential.

3. Method according to claim 1 or 2, **characterised in** adjusting feed rate of the influent flow on basis of the obtained measurement value(s) for the anode potential.

4. Method according to one of the preceding claims 1 - 3, **characterised in that** the arrangement comprises a plurality of microbial fuel cell units arranged in series, whereby the anode potential of at least one microbial fuel cell unit is measured and the feed of the influent flow to the arrangement is controlled and/or adjusted.

5. Method according to one of the preceding claims 1 - 4, **characterised in**

   - predetermining a minimum and/or maximum limit value for the potential of the anode, and
   - adjusting the feed of influent flow when the potential of the anode deviates outside the minimum and/or maximum limit value.

6. Method according to any of preceding claims 1 - 5, **characterised in** measuring value for an additional parameter, which is selected from pH, concentration of organic substance(s) and/or redox value of the influent flow and/or the effluent flow, and using the obtained measurement value for the additional parameter for control and/or adjustment of the feed of the influent flow.

7. Method according to claim 6, **characterised in**

- predetermining an upper and/or a lower limit value for the additional parameter, and
- adjusting the feed of the influent flow when the value of the additional parameter deviates outside the upper and/or lower limit value.

8. Method according claim 6 or 7, **characterised in**

- predetermining the minimum and maximum limit values for the potential of the anode;
- measuring the potential of the anode against the reference electrode, and observing that the potential of the anode is within an accepted range defined by the minimum and the maximum limit values; and
- measuring the value of at least one additional parameter and using the obtained measurement value for at least one additional parameter for adjusting the feed of the influent flow.

9. Method according claim 6 or 7, **characterised in**

- predetermining the minimum and maximum limit values for the potential of the anode;
- measuring the potential of the anode against the reference electrode, and observing that the anode potential outside the minimum and the maximum limit values; and
- measuring the value of at least one additional parameter and using the obtained measurement value for the additional parameter for adjustment of the feed of the influent flow.

10. Method according to one of the preceding claims 1 - 9, **characterised in** applying a wait time between two successive adjustments of influent feed.

11. Method according to one of the preceding claims 1 - 10, **characterised in** determining at least one minimum and maximum feed level for the feed of the influent flow.

12. Method according to one of the preceding claims 1 - 11, **characterised in that** the liquid medium is municipal or agricultural wastewater, an effluent from pulp and paper industry process; an effluent from oil and gas industry process; an effluent from mining process; or the liquid medium originates from food or beverage industry

13. A microbial fuel cell arrangement, comprising

- at least one microbial fuel cell unit comprising a cell reactor having an inlet and outlet for liquid medium, as well as an anode and a cathode arranged in the cell reactor and connected with each other through an external electrical circuit,
- means for measuring potential of the anode against a reference electrode,
- means for adjusting influent flow to the inlet,
- a controller, which is arranged in functional contact with the means for measuring the potential of the anode and with the means for adjusting the influent flow to the inlet.

14. Arrangement according to claim 13, **characterised in that** the arrangement comprises at least one additional sensor selected from a group of pH sensors, sensors for measuring concentration of organic substance(s) and/or redox sensor.

15. Arrangement according to claim 13 or 14, **characterised in that** the arrangement comprises memory means for storing the measured anode potential values and/or calculation means for calculating an average anode potential value from the measured anode potential values.

**Patentansprüche**

1. Verfahren zum Steuern des Betriebs einer mikrobiellen Brennstoffzellenanordnung mit mindestens einer mikrobiellen Brennstoffzelleneinheit, wobei die Einheit eine Anode und eine Kathode umfasst, die über eine externe elektrische Schaltung miteinander verbunden sind, wobei das Verfahren umfasst

- Zuführen eines Zuflussstroms eines flüssigem Medium, das organische Substanz(en) umfasst, zu der mikrobiellen Brennstoffzelleneinheit,
- Umwandeln mindestens eines Teils der organischen Substanz(en) in elektrische Energie in der mikrobiellen Brennstoffzelleneinheit unter Verwendung von Mikroorganismen,
- Messen des Anodenpotentials gegen eine Referenzelektrode und Erhalten von Messwert(en), und
- Verwenden des/der Messwerte(s) zum Steuern der Zufuhr des Zuflussstroms zur mikrobiellen Brennstoffzelleneinheit und
- Entfernen eines Abflussstroms des behandelten flüssigen Mediums aus der mikrobiellen Brennstoffzelleneinheit.

2. Verfahren nach Anspruch 1, **gekennzeichnet durch** das Einstellen der Zufuhr des Zuflussstroms auf Basis des/der erhaltenen Messwerte(s) für das Anodenpotential.

3. Verfahren nach Anspruch 1 oder 2, **gekennzeichnet durch** das Einstellen der Zufuhrrate des Zuflussstroms auf der Basis des/der erhaltenen Messwerte(s) für das Anodenpotenzial.

4. Verfahren nach einem der vorstehenden Ansprüche 1 - 3, **dadurch gekennzeichnet, dass** die Anordnung eine Vielzahl von in Reihe geschalteten mikrobiellen Brennstoffzelleneinheiten umfasst, wobei das Anodenpotential von mindestens einer mikrobiellen Brennstoffzelleneinheit gemessen und die Zufuhr des Zuflussstroms zu der Anordnung gesteuert und/oder eingestellt wird.

5. Verfahren nach einem der vorstehenden Ansprüche 1 - 4, **gekennzeichnet durch**

- Vorgeben eines minimalen und/oder maximalen Grenzwertes für das Anodenpotential und
- Einstellen der Zufuhr des Zuflussstroms, wenn das Anodenpotential außerhalb des minimalen und/oder maximalen Grenzwertes liegt.

6. Verfahren nach einem der vorhergehenden Ansprüche 1 - 5, **gekennzeichnet durch** einen Messen eines Wertes für einen zusätzlichen Parameter, der ausgewählt ist aus pH-Wert, Konzentration der organischen Substanz(en) und/oder Redoxwert des Zuflussstroms und/oder des Abflussstroms, und Verwendung des erhaltenen Messwertes für den zusätzlichen Parameter zur Steuerung und/oder Einstellung der Zufuhr des Zuflussstroms.

7. Verfahren nach Anspruch 6, **gekennzeichnet durch**

- Vorgeben eines oberen und/oder unteren Grenzwertes für den zusätzlichen Parameter und
- Einstellen der Zufuhr des Zuflussstroms, wenn der Wert des zusätzlichen Parameters außerhalb des oberen und/oder unteren Grenzwertes liegt.

8. Verfahren nach Anspruch 6 oder 7, **gekennzeichnet durch**

- Vorgeben des minimalen und maximalen Grenzwertes für das Anodenpotential;
- Messen des Anodenpotentials gegen die Referenzelektrode und Beobachten, dass das Anodenpotential innerhalb eines akzeptierten Bereichs liegt, der durch den minimalen und den maximalen Grenzwert definiert ist; und
- Messen des Wertes von mindestens einem zusätzlichen Parameter und Verwenden des erhaltenen Messwertes für mindestens einen zusätzlichen Parameter zum Einstellen der Zufuhr des Zuflussstroms.

9. Verfahren nach Anspruch 6 oder 7, **gekennzeichnet durch**

- Vorgeben des minimalen und maximalen Grenzwertes für das Anodenpotential;
- Messen des Anodenpotentials gegen die Referenzelektrode und Beobachten, dass das Anodenpotential außerhalb des minimalen und maximalen Grenzwertes liegt; und
- Messen des Wertes von mindestens einem zusätzlichen Parameter und Verwenden des erhaltenen Messwertes für den zusätzlichen Parameter zum Einstellen der Zufuhr des Zuflussstroms.

**10.** Verfahren nach einem der vorhergehenden Ansprüche 1 - 9, **gekennzeichnet durch** das Anwenden einer Wartezeit zwischen zwei aufeinanderfolgenden Einstellungen der Zuflusszufuhr.

**11.** Verfahren nach einem der vorhergehenden Ansprüche 1-10, **gekennzeichnet durch** das Bestimmen mindestens einer minimalen und maximalen Zufuhrhöhe für die Zufuhr des Zuflussstroms.

**12.** Verfahren nach einem der vorhergehenden Ansprüche 1-11, **dadurch gekennzeichnet, dass** das flüssige Medium kommunales oder landwirtschaftliches Abwasser, ein Abwasser aus der Zellstoff- und Papierindustrie; ein Abwasser aus der Öl- und Gasindustrie; ein Abwasser aus dem Bergbau; oder das flüssige Medium, das aus der Lebensmittel- oder Getränkeindustrie stammt, ist.

**13.** Mikrobielle Brennstoffzellenanordnung, umfassend

- mindestens eine mikrobielle Brennstoffzelleneinheit, umfassend einen Zellenreaktor mit einem Einlass und Auslass für flüssiges Medium sowie eine Anode und eine Kathode, die im Zellenreaktor angeordnet und über einen externen elektrischen Schaltkreis miteinander verbunden sind,
- Mittel zum Messen des Andenpotentials gegen eine Referenzelektrode,
- Mittel zum Einstellen des Zuflussstroms zum Einlass,
- eine Steuerung, die in funktionellem Kontakt mit den Mitteln zum Messen des Anodenpotentials und mit den Mitteln zum Einstellen des Zuflussstroms zum Einlass angeordnet ist.

**14.** Anordnung nach Anspruch 13, **dadurch gekennzeichnet, dass** die Anordnung mindestens einen zusätzlichen Sensor umfasst, der aus einer Gruppe von pH-Sensoren, Sensoren zum Messen der Konzentration organischer Substanz(en) und/oder Redox-Sensor ausgewählt ist.

**15.** Anordnung nach Anspruch 13 oder 14, **dadurch gekennzeichnet, dass** die Anordnung Speichermittel zum Speichern der gemessenen Anodenpotentialwerte und/oder Berechnungsmittel zum Berechnen eines durchschnittlichen Anodenpotentialwertes aus den gemessenen Anodenpotentialwerten umfasst.

**Revendications**

**1.** Procédé pour commander le fonctionnement d'un agencement de pile à combustible microbienne ayant au moins une unité de pile à combustible microbienne, laquelle unité comprend une anode et une cathode qui sont connectées l'une à l'autre par l'intermédiaire d'un circuit électrique externe, le procédé comprenant

- l'introduction d'un flux influent de milieu liquide, qui comprend une ou plusieurs substances organiques, dans l'unité de pile à combustible microbienne,
- la conversion d'au moins une partie des une ou plusieurs substances organiques en énergie électrique dans l'unité de pile à combustible microbienne au moyen de microorganismes,
- la mesure du potentiel de l'anode par rapport à une électrode de référence et l'obtention d'une ou plusieurs valeurs de mesure, et
- l'utilisation des une ou plusieurs valeurs de mesure pour commander l'introduction du flux influent dans l'unité de pile à combustible microbienne, et
- l'extraction d'un flux effluent de milieu liquide traité de l'unité de pile à combustible microbienne.

**2.** Procédé selon la revendication 1, **caractérisé par** l'ajustement de l'introduction du flux influent en fonction des une ou plusieurs valeurs de mesure du potentiel de l'anode obtenues.

**3.** Procédé selon la revendication 1 ou 2, **caractérisé par** l'ajustement du débit d'introduction du flux influent en fonction des une ou plusieurs valeurs de mesure du potentiel de l'anode obtenues.

**4.** Procédé selon l'une des revendications 1 à 3 précédentes, **caractérisé en ce que** l'agencement comprend une pluralité d'unités de pile à combustible microbienne montées en séries, si bien que le potentiel de l'anode d'au moins une unité de pile à combustible microbienne est mesuré et que l'introduction du flux influent dans l'agencement est commandée et/ou ajustée.

**5.** Procédé selon l'une des revendications 1 à 4 précédentes, **caractérisé par**

- la prédétermination d'une valeur limite minimale et/ou maximale du potentiel de l'anode, et
- l'ajustement de l'introduction du flux influent lorsque le potentiel de l'anode s'écarte en dehors de la valeur limite minimale et/ou maximale.

6. Procédé selon l'une quelconque des revendications 1 à 5 précédentes, **caractérisé par** la mesure de la valeur d'un paramètre supplémentaire, qui est choisi parmi le pH, la concentration en substance(s) organique(s) et/ou le potentiel rédox du flux influent et/ou du flux effluent, et l'utilisation de la valeur de mesure du paramètre supplémentaire obtenue pour commander et/ou ajuster l'introduction du flux influent.

7. Procédé selon la revendication 6, **caractérisé par**

- la prédétermination d'une valeur limite supérieure et/ou inférieure du paramètre supplémentaire, et
- l'ajustement de l'introduction du flux influent lorsque la valeur du paramètre supplémentaire s'écarte en dehors de la valeur limite supérieure et/ou inférieure.

8. Procédé selon la revendication 6 ou 7, **caractérisé par**

- la prédétermination des valeurs limites minimale et maximale du potentiel de l'anode ;
- la mesure du potentiel de l'anode par rapport à l'électrode de référence, et la confirmation que le potentiel de l'anode se situe dans une gamme acceptée définie par les valeurs limites minimale et maximale ; et
- la mesure de la valeur d'au moins un paramètre supplémentaire et l'utilisation de la valeur de mesure du au moins un paramètre supplémentaire obtenue pour ajuster l'introduction du flux influent.

9. Procédé selon la revendication 6 ou 7, **caractérisé par**

- la prédétermination des valeurs limites minimale et maximale du potentiel de l'anode ;
- la mesure du potentiel de l'anode par rapport à l'électrode de référence, et la confirmation que le potentiel de l'anode se situe en dehors des valeurs limites minimale et maximale ; et
- la mesure de la valeur d'au moins un paramètre supplémentaire et l'utilisation de la valeur de mesure du paramètre supplémentaire obtenue pour ajuster l'introduction du flux influent.

10. Procédé selon l'une des revendications 1 à 9 précédentes, **caractérisé par** l'application d'un temps d'attente entre deux ajustements successifs du flux influent.

11. Procédé selon l'une des revendications 1 à 10 précédentes, **caractérisé par** la détermination d'au moins un niveau d'introduction minimal et maximal pour l'introduction du flux influent.

12. Procédé selon l'une des revendications 1 à 11 précédentes, **caractérisé en ce que** le milieu liquide est des eaux usées municipales ou agricoles, un effluent d'un procédé de l'industrie des pâtes et papiers ; un effluent d'un procédé de l'industrie pétrolière et gazière ; un effluent d'un procédé minier ; ou le milieu liquide provient de l'industrie des produits alimentaires et des boissons.

13. Agencement de pile à combustible microbienne, comprenant

- au moins une unité de pile à combustible microbienne comprenant un réacteur de pile ayant une entrée et une sortie de milieu liquide, ainsi qu'une anode et une cathode disposées dans le réacteur de pile et connectées l'une à l'autre par l'intermédiaire d'un circuit électrique externe,
- des moyens pour mesurer le potentiel de l'anode par rapport à une électrode de référence,
- des moyens pour ajuster le flux influent à l'entrée,
- un régisseur, qui est disposé en contact fonctionnel avec les moyens pour mesurer le potentiel de l'anode et avec les moyens pour ajuster le flux influent à l'entrée.

14. Agencement selon la revendication 13, **caractérisé en ce que** l'agencement comprend au moins un capteur supplémentaire choisi dans un groupe comprenant des capteurs de pH, des capteurs pour mesurer la concentration en substance(s) organique(s) et/ou un capteur rédox.

15. Agencement selon la revendication 13 ou 14, **caractérisé en ce que** l'agencement comprend des moyens de mémoire pour enregistrer les valeurs du potentiel de l'anode mesurées et/ou des moyens de calcul pour calculer une valeur moyenne du potentiel de l'anode à partir des valeurs du potentiel de l'anode mesurées.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2165087 A

- US 20110287328 A